# EUROPEAN PATENT APPLICATION

(11) **EP 2 540 478 A1**
(43) Date of publication of application: **02.01.2013**
(21) Application number: 11747516.0
(22) Date of filing: 25.02.2011
(51) Int. Cl.: B29C 70/06, B29C 31/00, B29C 43/02, B29C 43/34, B29C 43/58

(54) **PREPREG LAMINATION HEAD AND AUTOMATIC PREPREG LAMINATION DEVICE EQUIPPED WITH SAME**

(30) Priority: 26.02.2010 JP 2010041916
(71) Applicant: Mitsubishi Heavy Industries, Ltd., Tokyo 108-8215 (JP)
(72) Inventor: ARAKAWA Daiki, Tokyo 108-8215 (JP); YAMADA Koji, Tokyo 108-8215 (JP); ETO Jun, Tokyo 108-8215 (JP); KOKUBU Masayuki, Tokyo 108-8215 (JP)
(74) Representative: Henkel, Breuer & Partner
(86) International application number: PCT/JP2011/054329
(87) International publication number: WO 2011/105560

(57) **Abstract**

Disclosed is a prepreg automatic lamination device wherein a prepreg lamination head for laminating a prepreg sheet (8) with the fiber direction (T2) oriented so as to intersect the lengthwise direction (T1) of the prepreg laminate is provided with a pair of guide rollers that are positioned to the outside of the work (W) in the widthwise direction and guide the prepreg sheet (8) so as to overlap the work (W), and a lamination shoe (31) that is provided between the pair of guide rollers in a manner such that the lamination shoe (31) can be extended and retracted in the fiber direction (T2) so as to press on one surface of the prepreg sheet (8) that has been guided to a position between the pair of guide rollers and adhere the prepreg sheet (8) to the work (W). The lamination shoe (31) is segmented in the widthwise direction of the prepreg sheet (8).

## Description

### Technical Field

The present invention relates to a prepreg lamination head that forms a prepreg laminated body by laminating a prepreg sheet in which a resin is impregnated into a fiber sheet and a prepreg automatic lamination device that includes the same.
Priority is claimed on Japanese Patent Application No. 2010-041916, filed February 26, 2010, the content of which is incorporated herein by reference.

### Background Art

Hitherto, a prepreg laminated body is manufactured by laminating plurality of prepreg sheets (FRP sheets) formed by impregnating a resin into a fiber sheet (a composite is formed), and the prepreg laminated body is used to manufacture (form) a body, a main blade, or the like of an airplane. Further, as a fiber, a carbon fiber is used due to its excellent features such as low weight, high strength, and high elasticity.

Further, in the prepreg sheet, the fiber sheet is formed by aligning the fiber directions of a plurality of fibers, a UV-setting resin or a thermosetting resin is used as an impregnating resin, and the resin impregnated into the fiber sheet is half cured (incompletely cured and uncured). For this reason, peelable paper is stuck on one surface (or both surfaces) of the prepreg sheet.

Then, the prepreg laminated body is manufactured (formed) by removing the peelable paper from the prepreg sheet and integrally laminating plurality of prepregs sheets while the fiber directions intersect each other. That is, on a prepreg sheet (a 0-degree layer) having a fiber direction directed toward 0°, for example, a prepreg sheet (an angle layer) having a fiber direction directed toward, for example 45° or 90° is laminated, and further a prepreg sheet (a 0-degree layer) having a fiber direction directed toward 0° is laminated thereon. In this way, the prepreg laminated body is manufactured by laminating a desired number of prepreg sheets on the work (the subject laminated body) integrally formed with the precedent laminated prepreg sheet by sequentially intersecting the fiber directions with each other.

On the other hand, in order to rapidly and highly-efficiently manufacture a planar prepreg laminated body, a prepreg automatic lamination device is proposed and is practically utilized (for example, see Patent Literature 1, Patent Literature 2, and Patent Literature 3).

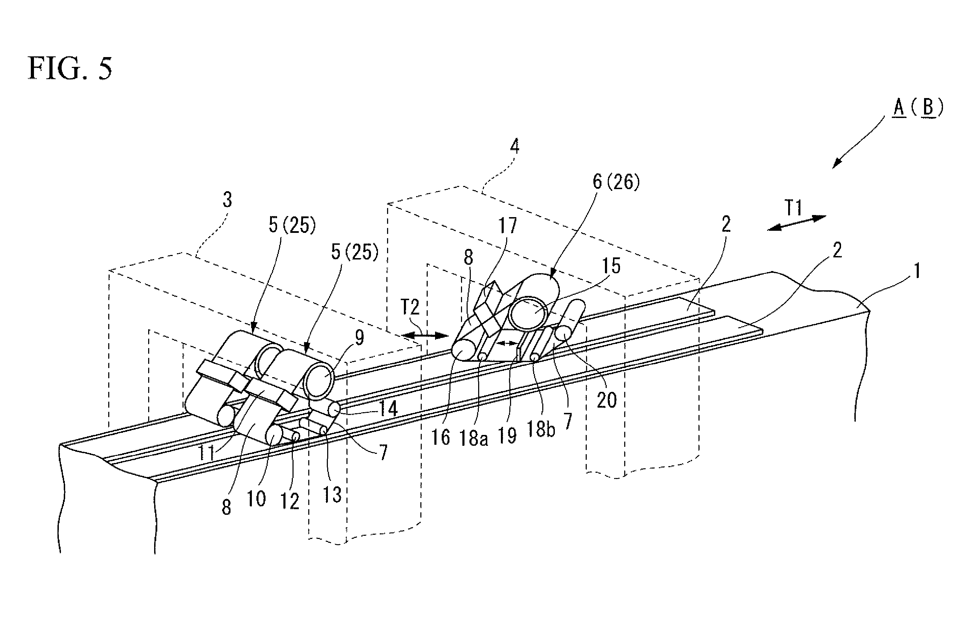

For example, as shown in FIG. 5, the prepreg automatic lamination device A includes a lamination table 2 which is installed on a mount 1 and is mounted enabling to advance and retract in one direction T1, a pair of door-like columns 3 and 4 which is installed with the lamination table 2 interposed therebetween and is arranged at a gap in one direction T1, a 0-degree-layer lamination head 5 which is supported on the one column 3 and is disposed above the lamination table 2, and an angle-layer lamination head (a prepreg lamination head) 6 which is supported on the other column 4 so as to be rotatable about the axis line extending in the up-down direction and is disposed above the lamination table 2.

Further, the 0-degree-layer lamination head 5 includes a supply roller 9 on which a prepreg sheet 8 having peelable paper 7 stuck on one surface thereof is wound, a support roller 10 which supports the prepreg sheet 8 reeled out from the supply roller 9 in a manner such that the prepreg sheet is wound thereon, a die cutter 11 which is installed between the supply roller 9 and the support roller 10 and cuts only the prepreg sheet 8 every predetermined length (in accordance with the size of the lamination subject piece of the work) without cutting the peelable paper 7, a front pressing roller 12 which guides the prepreg sheet 8 sent from the support roller 10 in one direction T1 so as to be laminated on the work disposed on the lamination table 2 and sticks the prepreg sheet 8 on the work by pressing the prepreg sheet from one surface thereof, a rear pressing roller 13 which peels the peelable paper 7 from the prepreg sheet 8 by pressing the prepreg sheet 8 passing through the front pressing roller 12 again, and a peelable paper collecting roller 14 which collects the peelable paper 7 peeled from the prepreg sheet 8.

On the other hand, the angle-layer lamination head 6 includes a supply roller 15 on which the prepreg sheet 8 having the peelable paper 7 stuck on one surface thereof is wound, a support roller 16 which supports the prepreg sheet 8 reeled out from the supply roller 15 in a manner such that the prepreg sheet is wound thereon, a die cutter 17 which is installed between the supply roller 15 and the support roller 16 and cuts only the prepreg sheet 8 every predetermined length (in accordance with the size of the lamination subject piece of the work) without cutting the peelable paper 7, a guide roller 18a which guides the prepreg sheet 8 sent from the support roller 16 so as to be superimposed on the work, a scraper roller (a guide roller) 18b which guides the prepreg sheet 8 so as to overlap the work together with the guide roller 18a and peels the peelable paper 7 from the prepreg sheet 8, a lamination shoe 19 which is installed between the guide roller 18a and the scraper roller 18b so as to freely advance and retract and sticks the prepreg sheet 8 sent from the support roller 16 on the work disposed on the lamination table 2 by pressing the prepreg sheet 8, and a peelable paper collecting roller 20 which collects the peelable paper 7.

Then, when the prepreg sheet 8 is laminated on the work by using the 0-degree-layer lamination head 5, the peelable paper collecting roller 14 is rotated. At the same time, the peelable paper 7 is pulled and the prepreg sheet 8 is reeled out from the supply roller 9. Further, only the prepreg sheet 8 is cut every predetermined length by the die cutter 11 at the same time when the prepreg sheet is reeled out from the supply roller 9. In this way, the cut prepreg sheet 8 is sent through the support roller 10 along the top surface of the work, and the prepreg sheet is pressed (as a primary rolling pressure) against the work from the side of the peelable paper 7 by the front pressing roller 12. Accordingly, the cut pieces of the prepreg sheet 8 cut and divided by the die cutter 11 are laminated and stuck on the lamination subject piece of the work. Further, the prepreg sheet passes through the rear pressing roller 13, and the prepreg sheet 8 stuck on the work is pressed (as a secondary rolling pressure). Further, the peelable paper 7 is pulled and peeled from the prepreg sheet 8 and is wound on the peelable paper collecting roller 14. In this way, the prepreg sheet 8 of the 0-degree layer having a fiber direction directed toward the length direction of the work (the length direction of the prepreg laminated body, the conveying direction of the lamination table 2, and one direction T1) is laminated on the work by the 0-degree-layer lamination head 5.

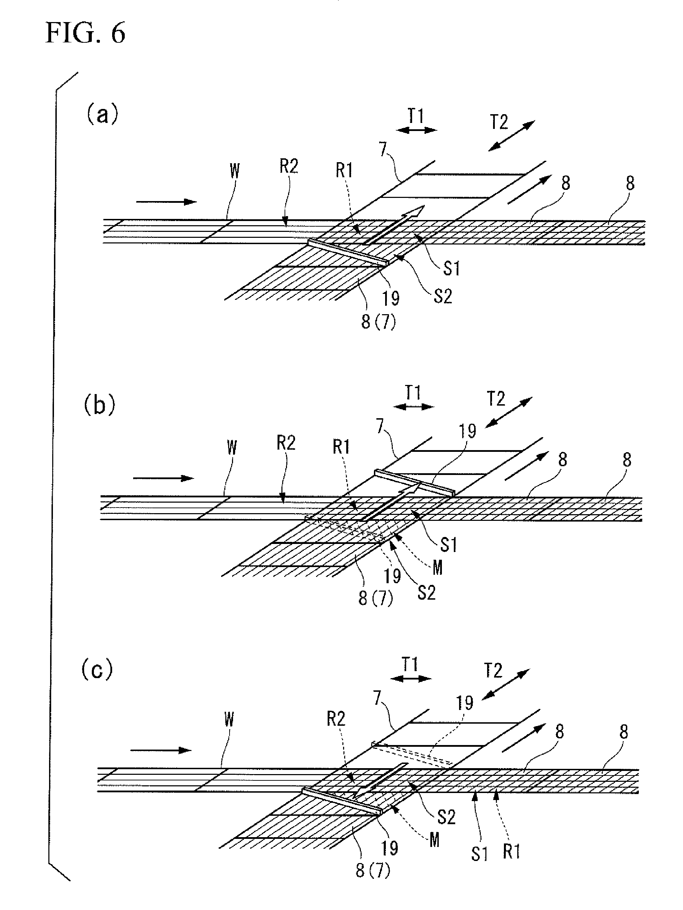

On the other hand, as shown in FIGS. 5 and 6, the work W on which the prepreg sheet 8 is laminated by the 0-degree-layer lamination head 5 is conveyed to the angle-layer lamination head 6 by the lamination table 2. Then, when the prepreg sheet 8 is laminated on the work W by the angle-layer lamination head 6, the angle-layer lamination head 6 is rotated, and is disposed so as to have a predetermined intersection angle with respect to the length direction of the work W (the conveying direction of the lamination table 2 and the one direction T1), for example, 45° or 90°. In this state, the peelable paper collecting roller 20 is rotated. Also, the peelable paper 7 is pulled and the prepreg sheet 8 is reeled out from the supply roller 15. Then, only the prepreg sheet 8 is cut every predetermined length by the die cutter 17. At this time, the prepreg sheet 8 is cut so as to be divided into a shape according to the lamination subject piece R1 of the work W (for example, an diamond shape in a case where a 45-degree layer is laminated on the work W).

In this way, at the step in which the prepreg sheet 8 is sent from the support roller 16 along the top surface of the work W by the guide roller 18a and the scraper roller 18b, the lamination shoe 19 moves in the fiber direction (the intersection direction) T2 of the prepreg sheet 8 while pressing the prepreg sheet 8. Accordingly, the cut piece S1 of the prepreg sheet 8 cut and divided by the die cutter 17 is stuck so as to be superimposed on the lamination subject piece R1 of the work W, and is integrally laminated thereon. Further, only the peelable paper 7 is pulled and peeled from the prepreg sheet 8 passing through the scraper roller 18b and stuck on the work W, and is wound on the peelable paper collecting roller 20. In this way, the prepreg sheet 8 of the angle layer having the fiber direction T2 intersecting the length direction of the work W (further, the fiber direction T1 of the prepreg sheet 8 of the 0-degree layer) is laminated on the work W by the angle-layer lamination head 6.

Then, as described above, the prepreg laminated body is manufactured by sequentially laminating the prepreg sheet 8 so that the fiber directions T1 and T2 intersect each other by using the 0-degree-layer lamination head 5 and the angle-layer lamination head 6.

### Citation List

### Patent Literature

[Patent Literature 1] Japanese Unexamined Patent Application, First Publication No 2004-17625
[Patent Literature 2] Japanese Unexamined Patent Application, First Publication No 2004-17633
[Patent Literature 3] Japanese Unexamined Patent Application, First Publication No 2004-181683

### SUMMARY OF THE INVENTION

### Problems to be solved by the Invention

However, in the prepreg automatic lamination device A, the lamination shoe 19 of the angle-layer lamination head 6 is formed in a single bar shape. For this reason, when the lamination shoe 19 advances and retracts in the fiber direction T2 of the prepreg sheet 8 and the cut piece S1 of the prepreg sheet 8 is stuck and laminated on the lamination subject piece R1 of the work W, as shown in sections (a) to (c) of FIG. 6, the cut piece S2 to be stuck at the next time is also pressed. Further, the large area M of the next cut piece S2 would be pressed. Then, in this way, when the next cut piece S2 which is not next object to stick is pressed, the peelable paper 7 of the cut piece S2 is partially peeled from the prepreg sheet 8 and is lifted upward or twisted, which leads to a loosened state.

For this reason, when the peelable paper 7 is pulled by rotating the peelable paper collecting roller 20 and the next cut piece S2 is disposed so as to be superimposed on the next lamination subject piece R2 of the work W, there is a problem in that the cut piece S2 may not be accurately positioned and disposed at a predetermined position, because the peelable paper 7 of the cut piece S2 is in a loosened state.

Furthermore, a method may be considered in which the bar-like lamination shoe 19 is disposed within the area of the lamination subject piece R1 of the work W, the cut piece S1 of the prepreg sheet 8 is partially stuck on the work W by advance and retract the lamination shoe 19 so that the next cut piece S2 is not pressed, and the prepreg sheet 8 of the angle layer which is not pressed is pressed at the same time when the prepreg sheet 8 is laminated by the 0-degree-layer lamination head 5. However, in this case, the area which is not pressed by the angle-layer lamination head 6 is substantially the same as, for example, the area M. That is, the area, which becomes large as the intersection angle becomes smaller, remains without being pressed. Accordingly, the area of the angle layer which remains without being pressed may not be easily stuck completely at the same time when the prepreg sheet 8 is laminated by the 0-degree-layer lamination head 5 and the quality of the product may not be reliably guaranteed.

The present invention is made in view of the above-described situation, and it is an object of the present invention to provide a prepreg lamination head that presses only a cut piece of a prepreg sheet which is stuck and laminated on a lamination subject piece of a subject laminated body (a work) by a lamination shoe and accurately positions the cut piece to a predetermined position and a prepreg automatic lamination device that includes the same.

### Solution to Problem

In order to achieve the above-described object, the present invention provides the following means.

According to an aspect of the present invention, there is provided a prepreg lamination head that is used to form a prepreg laminated body by laminating a plurality of prepreg sheets in which a resin is impregnated into a fiber sheet and laminate the prepreg sheet toward a fiber direction in a direction intersecting the length direction of the prepreg laminated body, wherein peelable paper is stuck on one surface of the prepreg sheet, wherein the prepreg lamination head includes: a pair of guide rollers that is disposed at both outsides of the subject laminated body in the width direction and guides the prepreg sheet so as to be superimposed on the subject laminated body; and a lamination shoe that is disposed between the pair of guide rollers so as to freely advance and retract in the fiber direction and sticks the prepreg sheet on the subject laminated body by pressing the prepreg sheet guided between the pair of guide rollers from one surface thereof, and wherein the lamination shoe is divided in the width direction of the prepreg sheet.

In this aspect of the present invention, since the lamination shoe is divided in the width direction of the prepreg sheet, for example, when the prepreg sheet of the angle layer is laminated on the subject laminated body at a small intersection angle of 45° with respect to the length direction of the subject laminated body (the work), the positions of the respective divided shoes formed by dividing the lamination shoe may be arranged so as to be deviated in the fiber direction of the prepreg sheet. For this reason, the pressing portion of each divided shoe pressing the prepreg sheet (the front end portion (the lower end portion) coming into contact with one surface of the prepreg sheet) may be disposed on the lamination subject piece of the subject laminated body. Accordingly, it is possible to prevent a problem in which the next cut piece of the prepreg sheet is pressed and the peelable paper is peeled, thereby the peelable paper is loosened.

Further, in the above-described prepreg lamination head, the plurality of divided shoes formed by dividing the lamination shoe may be respectively supported so as to be rotatable about the center axis line extending in the up-down direction.

In this case, since the respective divided shoes may be rotated about the center axis line extending in the up-down direction, the direction of each divided shoe may be easily aligned to the fiber direction of the prepreg sheet regardless of the magnitude of the intersection angle. Accordingly, the prepreg sheet of the angle layer may be appropriately laminated on the subject laminated body by freely advancing and retracting the respective divided shoes (the lamination shoe).

Furthermore, the above-described prepreg lamination head may further include a divided shoe rotating mechanism that synchronizes the plurality of divided shoes and rotates the respective plurality of divided shoes about the center axis line.

In this case, since the plurality of divided shoes may be synchronizes and rotates by the divided shoe rotating mechanism, the direction of each divided shoe may be further easily aligned to the fiber direction of the prepreg sheet.

Further, the above-described prepreg lamination head may further include a scraper roller that is installed between the pair of guide rollers so as to peel the peelable paper from one surface of the prepreg sheet.

In this case, the peelable paper may be peeled (pulled and peeled) and collected from one surface of the prepreg sheet laminated on the subject laminated body by using the lamination shoe.

According to an aspect of the present invention, there is provided a prepreg automatic lamination device that forms a prepreg laminated body by laminating a plurality of prepreg sheets formed by impregnating a resin into a fiber sheet, the prepreg automatic lamination device including: the above-described several prepreg lamination heads.

In the aspect of the present invention, it is possible to obtain the operation and the effect using the above-described prepreg lamination head.

### Advantageous Effects of Invention

In the prepreg lamination head and the prepreg automatic lamination device, the lamination shoe of the prepreg lamination head is divided in the width direction of the prepreg sheet, for example, when the prepreg sheet of the angle layer is laminated on the subject laminated body at a small intersection angle of 45° with respect to the length direction of the subject laminated body (the work), the positions of the respective divided shoes formed by dividing the lamination shoe may be arranged so as to be deviated in the fiber direction of the prepreg sheet. For this reason, the pressing portion of each divided shoe pressing the prepreg sheet may be disposed on the lamination subject piece of the subject laminated body. Accordingly, it is possible to prevent a problem in which the next cut piece of the prepreg sheet is pressed and the peelable paper is peeled, thereby the peelable paper is loosened.

Accordingly, according to the prepreg lamination head and the prepreg automatic lamination device, the cut piece of the prepreg sheet may be accurately positioned and disposed at a predetermined position, and the high-quality product may be manufactured (prepreg laminated body may be formed).

Further, in this way, in a case where the pressing portions of the respective divided shoes are arranged on the lamination subject piece of the subject laminated body, if the intersection angle is small when the cut piece of the prepreg sheet is laminated on the lamination subject piece of the subject laminated body by freely advancing and retracting the respective divided shoes (the lamination shoe) in the fiber direction while the prepreg sheet is pressed from one surface thereof, a non-pressed area occurs as in the conventional technology. On the contrary, since the positions of the respective divided shoes may be arranged so as to be deviated in the fiber direction, the area which remains without being pressed may be suppressed to be as minimal as possible. For this reason, the area which remains without being pressed may be appropriately stuck on the subject laminated body at the same time when the prepreg sheet is laminated on the subject laminated body by using the prepreg lamination head (the 0-degree-layer lamination head) that laminates the prepreg sheet toward the fiber direction in the length direction of the subject laminated body.

### Brief Description of Drawings

FIG. 1 is a diagram illustrating a 0-degree-layer lamination head of a conventional prepreg automatic lamination device and a 0-degree-layer lamination head of a prepreg automatic lamination device according to an embodiment of the present invention.
FIG. 2 is a diagram illustrating the prepreg lamination head (the angle-layer lamination head) according to the embodiment of the present invention.
FIG. 3 is a plan view illustrating a lamination shoe of the prepreg lamination head (the angle-layer lamination head) according to the embodiment of the present invention.
FIG. 4 is a side view illustrating a divided shoe of the lamination shoe of the prepreg lamination head (the angle-layer lamination head) according to the embodiment of the present invention.
FIG. 5 is a perspective view illustrating the prepreg automatic lamination device.
FIG. 6 is a diagram illustrating the lamination shoe of the conventional prepreg lamination head (the angle-layer lamination head).

### Description of Embodiments

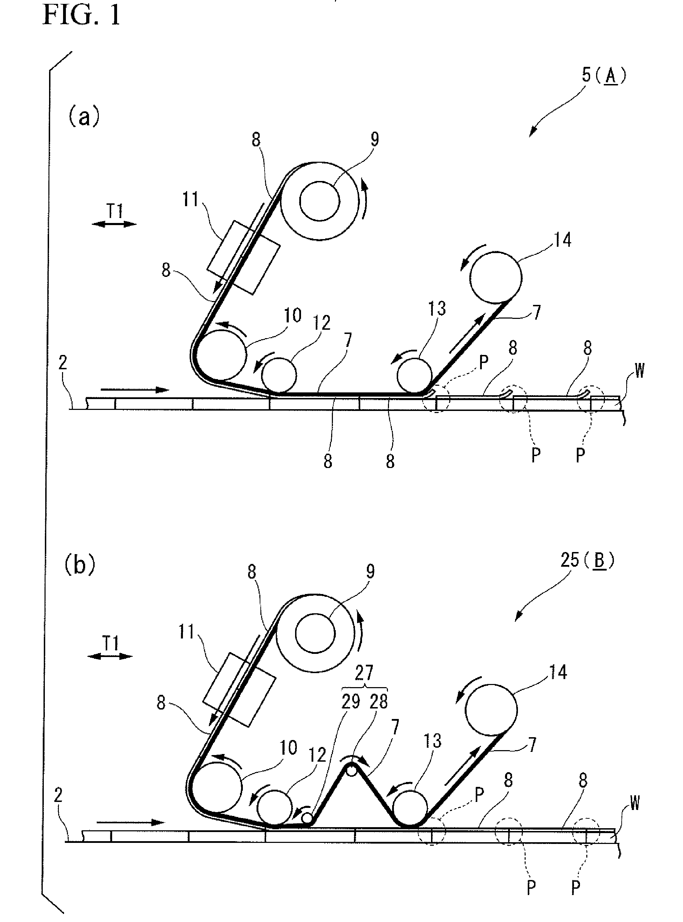

Hereinafter, referring to FIGS. 1 to 5, a prepreg lamination head according to an embodiment of the present invention and a prepreg automatic lamination device including the same will be described. This embodiment relates to a prepreg lamination head that manufactures (forms) a prepreg laminated body by laminating a prepreg sheet in which a resin is impregnated into a fiber sheet and a prepreg automatic lamination device that includes the same. Furthermore, in the embodiment, the same reference signs are given to the same components as those of the prepreg lamination head (the 0-degree-layer lamination head 5 and the angle-layer lamination head 6) and the prepreg automatic lamination device A shown in FIGS. 5 and 6, and a detailed description thereof will be omitted here.

As in the prepreg automatic lamination device A shown in FIG. 5, the prepreg automatic lamination device B of the embodiment includes a lamination table 2 which is installed on a mount 1 and is placed thereon so as to freely advance and retract in one direction T1, a pair of door-like columns 3 and 4 which is installed with the lamination table 2 interposed therebetween and is arranged at a gap in one direction T1, a 0-degree-layer lamination head 25 which is supported on the one column 3 and is disposed above the lamination table 2, and an angle-layer lamination head (a prepreg lamination head according to the present invention) 26 which is supported on the other column 4 so as to be rotatable about the axis extending in the up-down direction and is disposed above the lamination table 2.

First, as shown in section (b) of FIG. 1, the 0-degree-layer lamination head 25 includes a supply roller 9, a support roller 10, a rotary die cutter 11, a front pressing roller 12, a rear pressing roller 13, and a peelable paper collecting roller 14 which collects peelable paper 7 peeled from the prepreg sheet 8.

Furthermore, as is not the case in the conventional 0-degree-layer lamination head 5 shown in section (a) of FIG. 1, the 0-degree-layer lamination head 25 of the embodiment includes peelable paper precedent peeling units 27 which pulls and peels the peelable paper 7 from one surface of the prepreg sheet 8 between the front pressing roller 12 and the rear pressing roller 13 and guides and returns the peelable paper 7 so that the peelable paper is pressed against the prepreg sheet 8 using the rear pressing roller 13 so as to be stuck on one surface of the prepreg sheet 8.

Further, the peelable paper precedent peeling units 27 includes a peelable paper guide roller 28 and a scraper roller 29. The peelable paper guide roller 28 is disposed above the front pressing roller 12 and the rear pressing roller 13, and is provided by wrapping the peelable paper 7 thereon between the front pressing roller 12 and the rear pressing roller 13.

The scraper roller 29 is disposed between the front pressing roller 12 and the peelable paper guide roller 28 in the one direction T1 and is disposed below the peelable paper guide roller 28, and is disposed so as to pull and peel the peelable paper 7 from one surface of the prepreg sheet 8 passing through the front pressing roller 12 and guide the peelable paper to the peelable paper guide roller 28.

In the 0-degree-layer lamination head 25 with such a configuration, since the peelable paper precedent peeling units 27 is provided between the front pressing roller 12 and the rear pressing roller 13, the peelable paper 7 may be pulled and peeled between the front pressing roller 12 and the rear pressing roller 13 before the peelable paper 7 is pulled and peeled by the rear pressing roller 13. Further, in this way, since the peelable paper 7 which is pulled and peeled once by the peelable paper precedent peeling units 27 is guided so as to return to the rear pressing roller 13 and the prepreg sheet 8 is pressed and stuck on one surface of the prepreg sheet 8 by the rear pressing roller 13, it is possible to press the prepreg sheet 8 using the rear pressing roller 13 with the peelable paper 7 interposed therebetween and laminate the prepreg sheet on the work W according to the same manner as that of the conventional technology.

Then, since the peelable paper 7 is once pulled and peeled from the prepreg sheet 8 by the peelable paper precedent peeling units 27 when the peelable paper 7 is guided to the rear pressing roller 13 and is pulled and peeled from one surface of the prepreg sheet 8, it is possible to weaken the adhesiveness between the prepreg sheet 8 and the peelable paper 7 and easily peel the peelable paper 7 from one surface of the prepreg sheet 8. For this reason, it is possible to prevent a problem in which the peelable paper 7 passing through the rear pressing roller 13 is pulled and peeled and the cut end portion P of the prepreg sheet 8 is pulled and peeled upward from the work W as in the conventional 0-degree-layer lamination head 5 shown in section (a) of FIG. 1.

For this reason, it is possible to manufacture the product (form the prepreg laminated body) with high quality without forming a bent portion in the cut end portion P or forming a surface having a concave-convex shape due to the upward cut end portion P of the prepreg sheet 8.

Further, since the peelable paper precedent peeling units 27 is disposed above the front pressing roller 12 and the rear pressing roller 13 and includes the peelable paper guide roller 28 installed by wrapping the peelable paper 7 thereon between the front pressing roller 12 and the rear pressing roller 13, the peelable paper 7 may pass by the front pressing roller 12 and be reliably pulled and peeled from one surface of the prepreg sheet 8. Furthermore, the peelable paper 7 may be reliably and easily returned to the rear pressing roller 13 by guiding the peelable paper 7 using the peelable paper guide roller 28.

Further, since the scraper roller 29 is installed between the front pressing roller 12 and the peelable paper guide roller 28 and below the peelable paper guide roller 28, the peelable paper 7 may be more reliably pulled and peeled from one surface of the prepreg sheet 8 passing through the front pressing roller 12.

Furthermore, any scraper may be used instead of the scraper roller 29 if the scraper, which is disposed between the front pressing roller 12 and the peelable paper guide roller 28 and below the peelable paper guide roller 28, may peel the peelable paper 7 from the prepreg sheet 8 passing through the front pressing roller 12. Further, only the peelable paper guide roller 28 may constitute the peelable paper precedent peeling units 27. Furthermore, the front pressing roller 12 may be configured to guide the prepreg sheet 8 in the one direction T1 so as to be laminated on the work W, but may not essentially have a function of pressing the prepreg sheet 8 so as to be stuck on the work W.

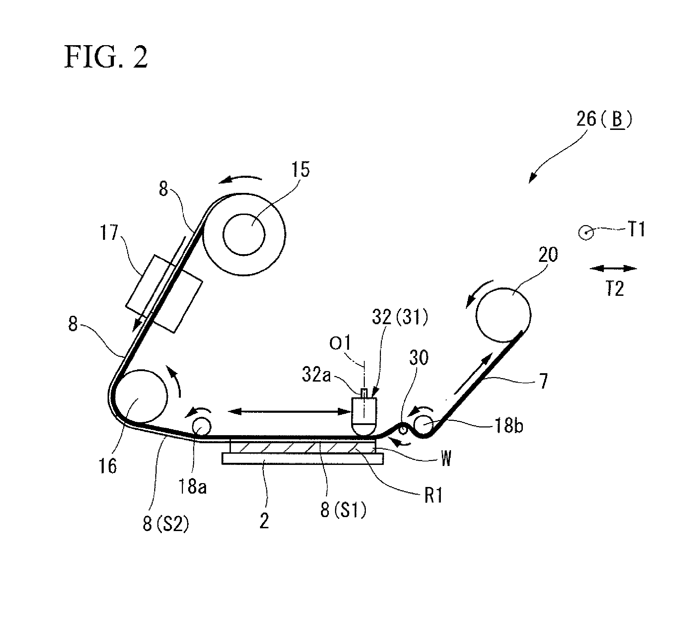

On the other hand, as shown in FIGS. 2 and 5, an angle-layer lamination head 26 includes a supply roller 15, a support roller 16, a rotary die cutter 17, a pair of guide rollers 18a and 18b which is disposed at both outsides of the work W in the width direction and guides the prepreg sheet 8 sent from the support roller 16 so as to be superimposed on the work W, a scraper roller 30 which is installed between the pair of guide rollers 18a and 18b and peels the peelable paper 7 from one surface of the prepreg sheet 8, a lamination shoe 31 which is disposed between one guide roller 18a near the support roller 16 and the scraper roller 30, is disposed so as to freely advance and retract in the fiber direction T2 of the prepreg sheet 8, and sticks the prepreg sheet 8 which is guided between the pair of guide rollers 18a and 18b to the work W by pressing the prepreg sheet 8 from one surface thereof, and a peelable paper collecting roller 20 which collects the peelable paper 7.

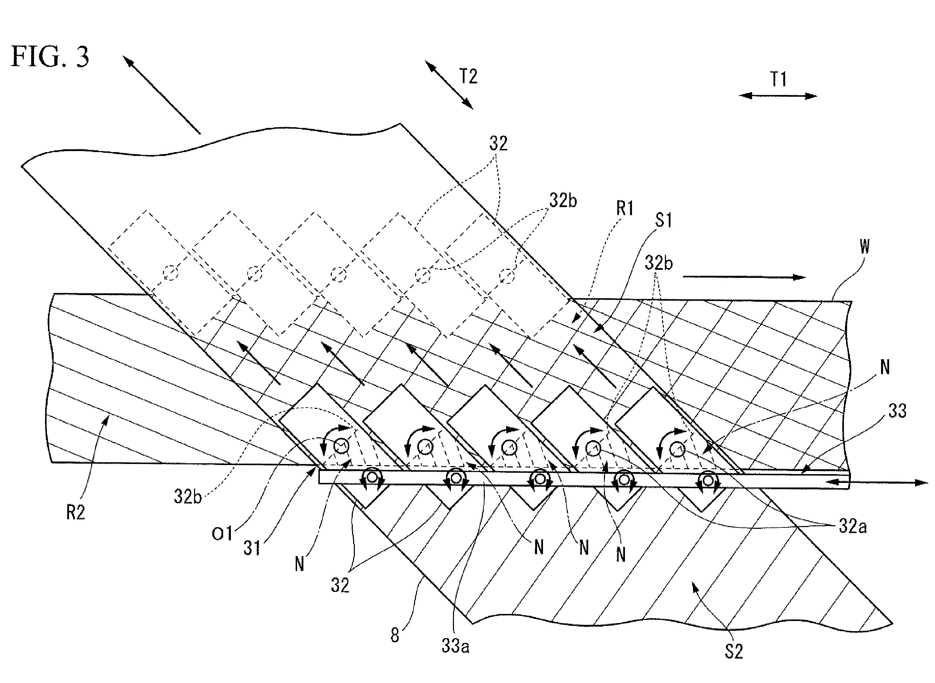

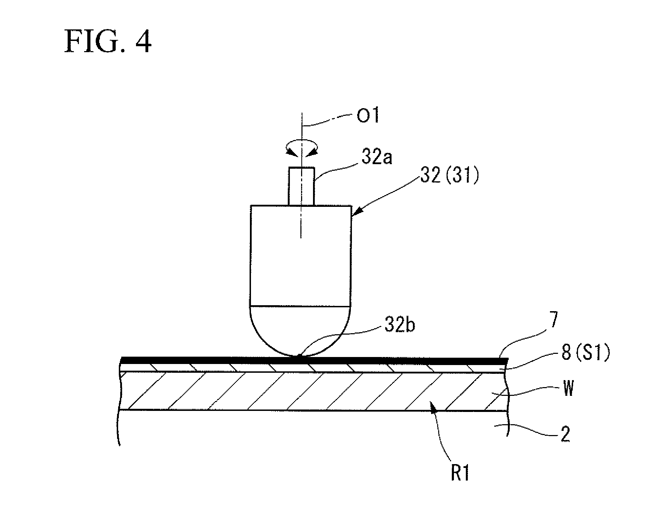

Further, in the angle-layer lamination head 26 of the embodiment, as shown in FIG. 3, the lamination shoe 31 is divided in the width direction of the prepreg sheet 8. That is, the lamination shoe 31 of the embodiment is configured by arranging plurality of block-like divided shoes 32. Further, as shown in FIG. 4, the respective divided shoes 32 are formed in a circular arc shape in which the front end (the lower end) thereof is convex downward when the divide shoes are viewed from the side thereof in the arrangement direction. Further, as shown in FIGS. 2 to 4, the respective divided shoes are arranged on the center axis line O1 of the up-down direction, and are installed by forming a rotary shaft 32a which protrudes upward from the rear end (the upper end).

Furthermore, these plurality of divided shoes 32 are respectively supported on the rotary shaft 32a and are rotatable about the center axis line O1 and movable forward and backward. Further, as shown in FIG. 3, the plurality of divided shoes 32 are provided so as to be rotatable about the respective center axis lines O1 in a manner of being synchronized with each other by the divided shoe rotating mechanism 33. The divided shoe rotating mechanism 33 includes a bar-like interlocked member 33a which is rotatably connected to the respective divided shoes 32. When the interlocked member 33a is advanced and retracted in the extension direction thereof, the plurality of divided shoes 32 may be synchronized and rotated. Further, when the angle-layer lamination head 26 (the supply roller 15, the support roller 16, the pair of guide rollers 18a and 18b, the rotary die cutter 17, the scraper roller 30, and the peelable paper collecting roller 20) rotates about the rotary axis line extending in the up-down direction, the interlocked member 33a is advanced and retracted in a manner of being synchronized with the rotation of the angle-layer lamination head, and then the plurality of divided shoes 32 are rotated in a manner of being synchronized with the rotation of the angle-layer lamination head 26. At this time, the divided shoe rotating mechanism 33 advances and retracts the interlocked member 33a in a manner of being synchronized with the rotation of the angle-layer lamination head 26 so that the extension direction of the pressing portion 32b of the each divided shoes 32 pressing the prepreg sheet 8 (the front end portion (the lower end portion) coming into contact with one surface of the prepreg sheet 8) intersects the fiber direction T2 of the prepreg sheet 8 which is guided and sent by the pair of guide rollers 18a and 18b, and then rotates the plurality of divided shoes 32.

Then, when the prepreg sheet 8 of the angle layer is laminated on the work W by the angle-layer lamination head 26 of the embodiment with such a configuration, the angle-layer lamination head 26 is rotated about the rotary axis line extending in the up-down direction, and is disposed so that the fiber direction T2 of the prepreg sheet 8 guided by the pair of guide rollers 18a and 18b intersects the length direction of the work W at a predetermined intersection angle.

Also, the respective divided shoes 32 are rotated by the divided shoe rotating mechanism 33 so that the extension direction of the pressing portion 32b intersects the fiber direction T2 of the prepreg sheet 8. Further, at this time, as shown in FIG. 3, the plurality of divided shoes 32 are disposed near the scraper roller 30, and are disposed at the initial position where one end portion of the pressing portion 32b of each divided shoe 32 is positioned on one-side end portion of the work W and the other end portion of the pressing portion 32b is positioned on the work W. That is, since the lamination shoe 31 of the embodiment is formed in a shape of plurality of block-like divided shoes 32 instead of a single bar shape as in the conventional lamination shoe 19, it is possible to dispose each divided shoe 32 so that the position thereof is deviated in the fiber direction T2 of the prepreg sheet 8. For this reason, in a state where one end portion of the pressing portion 32b of the respective divided shoe 32 is positioned on one-side end portion of the work W, the other end portion of the pressing portion 32b of each divided shoe 32 and further the entire pressing portion 32b may be positioned on the work W.

Then, when the cut piece S1 of the prepreg sheet 8 is stuck and laminated on the lamination subject piece R1 of the work W by the lamination shoe 31 of the embodiment, the lamination shoe 31 is moved down, and the pressing portion 32b of each divided shoe 32 comes into contact with one surface of the prepreg sheet 8 so as to press the contact portion. In the meantime, the lamination shoe 31 (the plurality of divided shoes 32) advances forward from the initial position. Accordingly, the cut piece S1 of the prepreg sheet 8 may be stuck on the lamination subject piece R1 of the work W.

Further, when the cut piece S1 of the prepreg sheet 8 is completely stuck on the work in this way, the next lamination subject piece R2 of the work W is conveyed to a predetermined position directly below the angle-layer lamination head 26 by the lamination table 2. Furthermore, the peelable paper collecting roller 20 of the angle-layer lamination head 26 is rotated so as to pull the peelable paper 7, and the next cut piece S2 is disposed so as to be superimposed on the next lamination subject piece R2 of the work W. At this time, since the angle-layer lamination head 26 of the embodiment includes the scraper roller 30 which is installed between the pair of guide rollers 18a and 18b, the peelable paper 7 is reliably pulled and peeled from one surface of the prepreg sheet 8 stuck on the work W, and is wound on the peelable paper collecting roller 20.

Further, at the step in which the next cut piece S2 is disposed so as to be superimposed on the next lamination subject piece R2 of the work W, the lamination shoe 31 which advances forward is retracted so as to return to the initial position while pressing the prepreg sheet 8 from one surface thereof. Accordingly, the cut piece S2 of the prepreg sheet 8 may be stuck on the next lamination subject piece R2 of the work W.

Then, in this way, since the prepreg sheet 8 of the angle layer is laminated by moving the plurality of divided shoes 32 forward from the initial position and moving the plurality of divided shoes backward to the initial position, it is possible to prevent a problem in which the next cut piece S2 is pressed and the peelable paper 7 is peeled, thereby the peelable paper 7 is loosened as in the case of using the conventional angle-layer lamination head 6 without pressing the next cut piece S2 of the prepreg sheet 8 by the lamination shoe 31. Accordingly, the cut piece S2 of the prepreg sheet 8 is disposed so as to be accurately positioned at a predetermined position, and the high-quality product is manufactured (prepreg laminated body is formed).

On the other hand, when the pressing portion 32b of the respective divided shoes 32 is disposed on the lamination subject piece R1 of the work W at the initial position, when the intersection angle is small, an area N which remains without being pressed occurs as shown in FIG. 3. However, since the positions of the respective divided shoes 32 may be disposed so as to be deviated in the fiber direction T2, the area N which remains without being pressed is suppressed to be as minimal as possible. For this reason, when the prepreg sheet 8 is further laminated by the 0-degree-layer lamination head 25 which laminates the prepreg sheet 8 toward the fiber direction T1 in the length direction of the work W, the non-pressed area N of the prepreg sheet 8 of the angle layer is simultaneously pressed, and hence the prepreg sheet is reliably stuck on the work.

Thus, in the prepreg lamination head (the angle-layer lamination head) 26 and the prepreg automatic lamination device B including the same of the embodiment, since the lamination shoe 31 is divided in the width direction of the prepreg sheet 8, for example, when the prepreg sheet 8 of the angle layer is laminated on the work W at an intersection angle smaller than 45 ° with respect to the length direction of the work W, the positions of the respective divided shoes 32 formed by dividing the lamination shoe 31 may be arranged so as to be deviated in the fiber direction T2 of the prepreg sheet 8. For this reason, the pressing portion 32b of the respective divided shoe 32 which presses the prepreg sheet 8 may be disposed on the lamination subject piece R1 of the work W. Accordingly, it is possible to prevent a problem in which the next cut piece S2 of the prepreg sheet 8 is pressed and the peelable paper 7 is peeled, thereby the peelable paper 7 is loosened.

Further, since the plurality of divided shoes 32 are respectively provided so as to be rotatable about the center axis line O1 extending in the up-down direction and the respective divided shoes 32 may be rotated about the center axis line O1, the direction of each divided shoe 32 may be easily aligned to the fiber direction T2 of the prepreg sheet 8 regardless of the magnitude of the intersection angle. Accordingly, the prepreg sheet 8 of the angle layer may be appropriately laminated on the work W by advancing and retracting the respective divided shoes 32 (the lamination shoe 31).

Furthermore, since the plurality of divided shoes 32 may be synchronized and rotated by the divided shoe rotating mechanism 33, the direction of each divided shoe 32 may be further easily aligned to the fiber direction T2 of the prepreg sheet 8.

Accordingly, according to the prepreg lamination head 26 and the prepreg automatic lamination device B of the embodiment, the cut piece S1 of the prepreg sheet 8 may be accurately positioned and disposed at a predetermined position, and the high-quality product may be manufactured (prepreg laminated body may be formed).

Further, the area N which remains without being pressed occurs when the intersection angle is small as in the conventional technology. However, since the positions of the respective divided shoes 32 may be arranged so as to be deviated in the fiber direction T2, the area N which remains without being pressed may be suppressed to be as minimal as possible. For this reason, the prepreg sheet 8 may be laminated on the work and the area N which is not pressed may be appropriately stuck on the work by the 0-degree-layer lamination head 25.

Further, since the scraper roller 30 is installed between the pair of guide rollers 18a and 18b so as to peel the peelable paper 7 from one surface of the prepreg sheet 8, it is possible to reliably peel (pull and peel) and collect the peelable paper 7 from one surface of the prepreg sheet 8 laminated on the work W by using the lamination shoe 31.

As described above, an embodiment of the prepreg lamination head and the prepreg automatic lamination device including the same according to the present invention has been described. However, the present invention is not limited to the above-described embodiment, and may be appropriately modified without departing from the spirit thereof. The present invention is not limited to the above-mentioned description, and is limited only to the scope of the appended claims. For example, in the embodiment, the lamination table 2 is configured to advance and retract on the mount 1 in one direction T1, but the door-like columns 3 and 4 may be configured to advance and retract relative to the lamination table 2 in one direction T1. That is, the work W may be placed on the lamination table 2 so as to freely advance and retract relative to the prepreg lamination heads 25 and 26 in one direction T1.

### Industrial Applicability

According to the present invention, it is possible to provide a prepreg lamination head that presses only a cut piece of a prepreg sheet which is stuck and laminated on a lamination subject piece of a subject laminated body (a work) by a lamination shoe and accurately positions the cut piece to a predetermined position and a prepreg automatic lamination device that includes the same.

### Reference Signs List

1: mount
2: lamination table
3: one column
4: other column
5: conventional 0-degree-layer lamination head
6: conventional angle-layer lamination head
7: peelable paper
8: prepreg sheet
9: supply roller
10: support roller
11: die cutter (rotary die cutter)
12: front pressing roller
13: rear pressing roller
14: peelable paper collecting roller
15: supply roller
16: support roller
17: die cutter (rotary die cutter)
18a: guide roller
18b: guide roller
19: conventional lamination shoe
20: peelable paper collecting roller
25: 0-degree-layer lamination head (prepreg lamination head)
26: angle-layer lamination head (prepreg lamination head)
27: peelable paper precedent peeling units
28: peelable paper guide roller
29: scraper roller
30: scraper roller
31: lamination shoe
32: divided shoe
32a: rotary shaft
32b: pressing portion
33: divided shoe rotating mechanism
33a: interlocked member
A: conventional prepreg automatic lamination device
B: prepreg automatic lamination device
M: area
N: area
O1 center axis line of divided shoe
P: cut end portion
R1: lamination subject piece
R2: next lamination subject piece
S1: cut piece
S2: next cut piece
T1: one direction (length direction of subject laminated body and fiber direction of prepreg sheet of 0-degree layer)
T2: fiber direction of prepreg sheet of angle layer
W: work (subject laminated body)

## Claims

1. A prepreg lamination head that is used to form a prepreg laminated body by laminating a plurality of prepreg sheets in which a resin is impregnated into a fiber sheet and laminate the prepreg sheet toward a fiber direction in a direction intersecting the length direction of the prepreg laminated body,
wherein peelable paper is stuck on one surface of the prepreg sheet,
wherein the prepreg lamination head comprises:
a pair of guide rollers that is disposed at both outsides of a subject laminated body in the width direction and guides the prepreg sheet so as to be superimposed on the subject laminated body; and
a lamination shoe that is disposed between the pair of guide rollers so as to freely advance and retract in the fiber direction and sticks the prepreg sheet on the subject laminated body by pressing the prepreg sheet guided between the pair of guide rollers from one surface thereof, and
wherein the lamination shoe is divided in the width direction of the prepreg sheet.

2. The prepreg lamination head according to claim 1,
wherein the plurality of divided shoes formed by dividing the lamination shoe are respectively supported so as to be rotatable about the center axis line extending in the up-down direction.

3. The prepreg lamination head according to claim 2, further comprising:
a divided shoe rotating mechanism that synchronizes the plurality of divided shoes and rotates the respective plurality of divided shoes about the center axis line.

4. The prepreg lamination head according to any one of claims 1 to 3, further comprising:
a scraper roller that is installed between the pair of guide rollers so as to peel the peelable paper from one surface of the prepreg sheet.

5. A prepreg automatic lamination device that forms a prepreg laminated body by laminating a plurality of prepreg sheets formed by impregnating a resin into a fiber sheet, the prepreg automatic lamination device comprising:
the prepreg lamination head according to any one of claims 1 to 4.
